Europäisches Patentamt

(19) European Patent Office  (11) Publication number: **0 064 397**
Office européen des brevets  **B1**

(12) **EUROPEAN PATENT SPECIFICATION**

(45) Date of publication of the patent specification:
01.08.84

(21) Application number: **82302222.3**

(22) Date of filing: **29.04.82**

(51) Int. Cl.³: **C 09 J 3/14,** C 08 L 35/06,
C 08 L 25/08

(54) **Hot melt adhesive.**

(30) Priority: **29.04.81 US 258507**

(43) Date of publication of application:
**10.11.82 Bulletin 82/45**

(45) Publication of the grant of the patent:
**01.08.84 Bulletin 84/31**

(84) Designated Contracting States:
**BE DE FR GB IT NL**

(56) References cited:
**FR - A - 2 132 383**

(73) Proprietor: **ATLANTIC RICHFIELD COMPANY, 515 South
Flower Street, Los Angeles California 90071 (US)**

(72) Inventor: **Lordi, Frank Eugene, 1344 Hollyberry Lane,
West Chester, PA 19380 (US)**

(74) Representative: **Cropp, John Anthony David et al,
MATHYS & SQUIRE 10 Fleet Street, London, EC4Y 1AY
(GB)**

## Description

This invention relates to hot melt adhesives.

In factories featuring methods which are significantly automated, advantages accrue from the use of hot melt adhesives as distinguished from adhesives featuring an organic solvent and/or water as a carrier for components having the combination of sufficient molecular weight and sufficiently polar groups to impart surface-bonding characteristics thereto.

Polyesters, polyamides, and related resins having a significant portion of the polymeric chain comprising polarizing atoms have long been used as hot adhesives, sometimes modified by appropriate concentrations of plasticizers, tackifiers and/or nonvolatile liquid extenders.

Interpolymers of the styrene-maleic anhydride type have utilized maleic anhydride in styrene type resins to increase the softening point of the resin. However, prior workers failed to develop an economically attractive hot melt adhesive featuring styrene-maleic anhydride resins.

In accordance with the present invention there is provided an adhesive having at elevated temperatures an appropriate viscosity and appropriate applicability to be applicable as a hot adhesive at a temperature within a range from about 180°F (82°C) to about 475°F (246°C), said adhesive containing as essential components, from about 20 to 70% by weight of an interpolymer, consisting predominantly of a monovinyl aromatic compound and containing from 8 to about 30% by weight of maleic anhydride, and from about 80 to about 30% by weight of a modifier imparting ease of application and ease of curing to said adhesive. In certain preferred embodiments, the adhesive contains as modifier from about 10 to about 25% by weight of liquid hydrocarbonaceous extender which at ambient conditions has a high viscosity; from about 10 to about 45% by weight of tackifier hydrocarbonaceous material such as a copolymer of α-methyl styrene and vinyl toluene; from about 10 to about 25% by weight of ester as plasticizer polycarboxylic acid; and from about 0.01 to about 5% enhancers comprising 0.05 to 0.5% stericly hindered phenol antioxidant. Said adhesive, after bonding of surfaces with a thin hot film of said adhesive, and cooling to ambient temperature, provides an effective adhesive bond between components to be adhered.

The nature of the invention is further clarified by reference to a plurality of illustrative embodiments.

*Example 1:*

Styrene-maleic anhydride resin is prepared by initially preparing a xylene solution of a cation polymerized rubber, using about 90% butadiene, about 10% styrene, by weight, and secondary butyl lithium as the catonic polymerization catalyst. After the partial block rubber has been prepared, maleic anhydride and styrene are introduced into the rubber solution in the appropriate proportions, and the temperature and pressure are increased to expedite the interpolymerization to produce an interpolymer containing about 8% maleic anhydride, about 15% rubber, and about 77% styrene, by weight. A commercially available rubber modified styrene-maleic anhydride resin may be employed in lieu of an experimental sample.

An adhesive is prepared by kneading together in a plasticizing mixer the following composition:

|  | Parts by weight |
| --- | --- |
| Styrene-maleic anhydride resin (supra) | 30 |
| Piccolastic — A5 | 20 |
| Piccatex 75 | 35 |
| Flexol Z88 | 15 |
| Irganox 1010 | 0.1 |

Piccolastic A5 is an extender marketed by Hercules, and is a high viscosity liquid polystyrene, an example of a hydrocarbonaceous liquid. Piccatex 75 is a tackifier marketed by Hercules and is a copolymer of vinyl toluene and α-methyl styrene. Piccatex is an example of a hydrocarbonaceous tackifier. The methyl groups in the monomers provide steric hindrance favoring formation of copolymers having molecular weights promoting tackiness, which molecular weights are lower than desirable in high strength plastics. Flexol Z88 is a dioctyl azelate plasticizer marketed by Union Carbide and illustrative of the esters of polycarboxylic acids which have been utilized commercially as plasticizers. Irganox 1010 is a stericly hindered phenol, a pentaerythritol tetra (hydrocinnamate) type structure described as tetrakis [methylene-(3,5-ditert.-butyl)-4-hydroxyhydrocinnamate]methane marketed by Ciba-Geigy. Such an antioxidant exemplifies the use of various enhancers which are sometimes incorporated in amounts less than about 5% in plastic and adhesive compositions.

The styrene-maleic anhydride resin pellets were first plasticized on a 2-roll mill at about 320°F (160°C), and as the plasticizer, extender, tackifier, and antioxidant lowered the viscosity of the mixture, the roll temperature was lowered to 210°F (99°C). The thus prepared hot adhesive was applied as a thin film to corrugated paperboard, which was laminated to another piece of corrugated paperboard. A series of thus prepared sandwiches was allowed to cool, and subjected to tests indicative of the effectiveness of the adhesive. The cooled hot melt adhesive had excellent adhesion to the paperboard, good bond strength, good flexibility and toughness comparable to a commercial hot melt adhesive.

*Example 2:*

A styrene-maleic anhydride resin was prepared by dispersing maleic anhydride in styrene and subjecting the mixture to polymerization to provide a resin of an interpolymer containing about 14% maleic anhydride, and 86% styrene, by weight. The polymerizate was devolatilized and extruded to provide pellets of a styrene-maleic anhydride molding resin generally equivalent to a commercially available styrene-maleic anhydride molding resin.

A hot melt adhesive was prepared using said styrene-maleic anhydride resin and a ³⁄₁ ratio (instead of ⅞ ratio) of Piccatex to Flexol (i.e. tackifier to plasticizer ratio) as follows:

|                                | Parts by weight |
|--------------------------------|-----------------|
| Styrene-maleic anhydride resin (supra) | 30 |
| Piccolastic-A5                 | 20              |
| Piccatex                       | 37.5            |
| Flexol Z88                     | 12.5            |
| Irganox 1010                   | 0.1             |

The performance data for the resulting adhesive were generally equivalent to the data for Example 1. These and other tests indicated that a wide range of styrene-maleic anhydride resins could be employed in a concentration from about 20 to about 70% by weight in hot adhesives. The anhydride groups of the interpolymer enhance the adhesive effectiveness of the hot adhesive.

By a series of tests it was established that the composition of the hot melt adhesive should be: a mixture containing from about 20 to about 70% by weight of an interpolymer consisting predominantly of a monovinyl monoclear aromatic compound and containing from about 8 to about 30% by weight of maleic anhydride, said mixture containing from about 80 to about 30% by weight of modifier imparting ease of application and ease of curing to said adhesive; said adhesive, after bonding of surfaces with a thin hot film of said adhesive, and cooling to ambient temperature, providing an effective adhesive bond between components to be adhered. In preferred embodiments, the modifier comprises from about 10 to about 25% by weight of liquid hydrocarbonaceous extender which at ambient conditions has a high viscosity; from about 10 to about 45% by weight of hydrocarbonaceous tackifier; from about 10% to about 25% by weight of polycarboxylic acid ester as plasticizer; and from about 0.01 to about 5% by weight enhancer comprising 0.05 to 0.5% stericly hindered phenol antioxidant. Certain preferred embodiments feature the use of polystyrene extenders and the use of a copolymer of α-methyl styrene and vinyl toluene as the tackifier.

## Claims

1. An adhesive having at elevated temperatures an appropriate viscosity throughout an appropriate range to be applicable as a hot adhesive at a temperature within a range from about 180°F (82°C) to about 475°F (246°C), said adhesive containing as essential components—

from about 20 to about 70% by weight of an interpolymer consisting predominantly of a monovinyl mononuclear aromatic compound and containing from about 8 to about 30% by weight of maleic anhydride; and

from about 80 to about 30% by weight of modifier imparting ease of application and ease of curing to said adhesive;

said adhesive, after bonding of surfaces with a thin hot film of said adhesive, and cooling to ambient temperature, providing an effective adhesive bond between components to be adhered.

2. The adhesive of Claim 1 containing as modifier—

from about 10 to about 25% by weight of liquid extender which at ambient conditions has a high viscosity;

from about 10 to about 45% by weight of hydrocarbonaceous tackifier;

from about 10 to about 25% by weight of polycarboxylic acid ester as plasticizer; and

from about 0.01 to about 5% by weight of enhancers comprising 0.05 to 0.5% stericly hindered phenol antioxidant.

3. The adhesive of Claim 2 in which the extender is a liquid polysterene and in which the tackifier is a copolymer of α-methyl styrene and vinyl toluene.

4. The adhesive of Claim 1, 2 or 3 in which the interpolymer is derived from about 9% maleic anhydride and about 91% styrene, by weight.

5. The adhesive of Claim 1, 2 or 3 in which the interpolymer is derived from about 7% maleic anhydride, about 17% rubber and about 76% styrene, by weight.

## Patentansprüche

1. Klebstoff, der bei erhöhten Temperaturen eine geeignete Viskosität über einen entsprechenden Bereich aufweist, um als ein heisser Klebstoff bei einer Temperatur im Bereich von etwa 180°F (82°C) bis etwa 475°F (246°C) verwendbar zu sein, wobei der Klebstoff als wesentliche Komponenten:

etwa 20 bis etwa 70 Gew.-% eines Interpolymers, welches überwiegend aus einer einkernigen aromatischen Monovinylverbindung besteht und etwa 8 bis etwa 30 Gew.-% Maleinsäureanhydrid enthält, und

etwa 80 bis 30 Gew.-% eines Modifikationsmittels, welches dem Klebstoff die Fähigkeit einer leichten Anwendung eines leichten Aushärtens vermittelt, enthält,

wobei der Klebstoff nach dem Verkleben von Oberflächen mit einem dünnen heissen Film des Klebstoffes und Abkühlen auf Umgebungstemperatur eine wirksame Haftverbindung zwischen den zu verklebenden Komponenten schafft.

2. Klebstoff nach Anspruch 1, der als Modifikationsmittel:

etwa 10 bis etwa 25 Gew.-% flüssiges Kohlenwasserstoff-Streckmittel, welches bei Umgebungstemperatur eine hohe Viskosität aufweist, etwa 10 bis etwa 45 Gew.-% eines Kohlenwasserstoff-Klebrigmachers,

etwa 10 bis etwa 25 Gew.-% eines Polycarbonsäureesters als Plastifiziermittel, und

etwa 0,01 bis etwa 5 Gew.-% eines Steigerungsmittels (enhancers), welches 0,05 bis 0,5% eines sterisch gehinderten Phenol/Antioxidations-Mittels aufweist,

enthält.

3. Klebstoff nach Anspruch 2, worin das Streckmittel ein flüssiges Polystyrol ist und worin der Klebrigmacher ein Copolymer aus α-Methylstyrol und Vinyltoluol ist.

4. Klebstoff nach einem der Ansprüche 1, 2 oder 3, worin das Interpolymer aus etwa 9 Gew.-% Maleinsäureanhydrid und etwa 91 Gew.-% Styrol erhalten wird.

5. Klebstoff nach einem der Ansprüche 1, 2 oder 3, worin das Interpolymer aus etwa 7 Gew.-% Maleinsäureanhydrid, etwa 17 Gew.-% Kautschuk und etwa 76 Gew.-% Styrol erhalten wird.

## Revendications

1. Adhésif présentant à des températures élevées une viscosité appropriée dans une gamme convenable pour une application en tant qu'adhésif chaud à une température dans la gamme d'environ 82 à 246° C (180 à 475° F), caractérisé en ce qu'il comprend en tant que composants essentiels:

d'environ 20 à environ 70% en poids d'un interpolymère consistant principalement en un composé aromatique monovinylique mononucléique et contenant d'environ 8 à 30 % en poids d'anhydride maléique, et

d'environ 80 à 30% en poids d'un agent modificateur, facilitant l'application et le durcissement de cet adhésif,

cet adhésif fournissant, après liaison des surfaces avec une mince pellicule chaude d'adhésif et refroidissement à la température ambiante, une liaison adhésive efficace entre des composants à coller.

2. Adhésif selon la revendication 1, caractérisé en ce qu'il contient en tant qu'agent modificateur:

d'environ 10 à 25% en poids de charge hydrocarbonée liquide qui présente une viscosité élevée dans les conditions ambiantes,

d'environ 10 à 45% en poids d'un agent augmentant le pouvoir collant,

d'environ 10 à 25% en poids d'un ester polycarboxylique tant que plastifiant, et

d'environ 0,01 à 0,5% en poids d'agents exaltants, comprenant 0,05 à 0,5% d'antioxydant de type phénol, stériquement encombré.

3. Adhésif selon la revendication 2, caractérisé en ce que la charge est un polystyrène liquide et que l'agent augmentant le pouvoir collant est un copolymère d'α-méthyl/styrène et de vinyl/toluène.

4. Adhésif selon l'une des revendications 1, 2 ou 3, caractérisé en ce que l'interpolymère dérive d'environ 9% d'anhydride maléique et d'environ 91% de styrène, en poids.

5. Adhésif selon l'une des revendications 1, 2 ou 3, caractérisé en ce que l'interpolymère dérive d'environ 7% d'anhydride maléique, d'environ 17% de caoutchouc et d'environ 76% de styrène en poids.